# EUROPEAN PATENT APPLICATION

(11) **EP 4 672 383 A1**
(43) Date of publication of application: **31.12.2025**
(21) Application number: 24763041.1
(22) Date of filing: 22.02.2024
(51) Int. Cl.: H01M 4/66, H01M 4/02, H01M 4/64

(54) **CURRENT COLLECTOR, ELECTRODE SHEET, SECONDARY BATTERY, AND ELECTRONIC DEVICE**

(30) Priority: 28.02.2023 CN 202310224558
(71) Applicant: BYD Company Limited, Shenzhen, Guangdong 518118 (CN)
(72) Inventor: LI, Wanli, Shenzhen, Guangdong 518118 (CN); SHI, Guojing, Shenzhen, Guangdong 518118 (CN); HE, Kefeng, Shenzhen, Guangdong 518118 (CN); CHEN, Peixing, Shenzhen, Guangdong 518118 (CN); XIAO, Jing, Shenzhen, Guangdong 518118 (CN)
(74) Representative: Taor, Simon Edward William
(86) International application number: PCT/CN2024/078081
(87) International publication number: WO 2024/179358

(57) **Abstract**

A power consuming device, comprising a secondary battery. The secondary battery comprises an electrode sheet, the electrode sheet comprises a current collector and a positive electrode active material disposed on the current collector. The current collector is used to carry an electrode active material and comprises a foil material and a conductive coating disposed on two opposite sides of the foil material. The conductive coating comprises a conductive material dense region and a plurality of recessed less adhesive regions arranged at intervals in the conductive material dense region, the conductive material dense region comprises a conductive material and a binder, and the conductive material comprises a granular conductive agent. At least part of each recessed less adhesive region does not comprise a binder, and at least part of the region does not comprise a granular conductive material.

## Description

This application claims priority to Chinese Patent Application No. 202310224558.7, filed with the China National Intellectual Property Administration on February 28, 2023 and entitled "CURRENT COLLECTOR, ELECTRODE PLATE, SECONDARY BATTERY, AND POWER CONSUMING DEVICE", which is incorporated herein by reference in its entirety.

### TECHNICAL FIELD

This application relates to the field of battery technologies, and in particular, to a current collector, an electrode plate, a secondary battery, and a power consuming device.

### BACKGROUND

Usually, a surface of a current collector used in a lithium-ion battery has a conductive coating, such as a carbon coating, and the carbon coating usually covers the entire surface of the current collector. However, an existing carbon-coated current collector is more focused on reducing a contact resistance of the battery. This reduces an apparent internal resistance of the battery and improves room-temperature performance of the battery, but has no clear effect on improving low-temperature performance of the battery. For example, use of carbon-coated aluminum foil has no clear effect on improving low-temperature performance of a lithium battery using lithium iron phosphate as a positive electrode active material.

### SUMMARY

In view of this, this application provides a current collector of a new type of structure, to reduce an ohmic resistance of a battery at the same time and further reduce a contact resistance, so that low-temperature performance of a battery is significantly improved.

Specifically, a first aspect of this application provides a current collector for carrying an electrode active material. The current collector includes:
foil; and
a conductive coating, where the conductive coating is disposed on surfaces of two opposite sides of the foil, and the conductive coating includes:
   a conductive material dense region, where the conductive material dense region includes a conductive material and a binder, and the conductive material includes a granular conductive agent; and
   a plurality of recessed low-binder regions, where the plurality of recessed low-binder regions are spaced apart in the conductive material dense region, at least a part of each of the plurality of recessed low-binder regions does not include the binder, and at least a part of each of the plurality of recessed low-binder regions does not include the conductive material.

Because the current collector has the conductive coating including the recessed low-binder region, an ohmic resistance and a contact resistance of a battery using the current collector can be reduced at the same time, so that low-temperature performance of the battery is significantly improved. At the same time, room-temperature performance, high-temperature performance, and the like of the battery are not reduced, and are even slightly improved.

In some implementations, the current collector satisfies one or more of the following conditions:
(a) an average area S of the plurality of recessed low-binder regions is smaller than a projected area corresponding to a particle size D₅₀ of the electrode active material; and
(b) an average particle size d of the granular conductive agent is less than 1/2 of a particle size D₁₀ of the electrode active material, where
   D₁₀ and D₅₀ represent particle sizes corresponding to cases in which a cumulative distribution percentage of a quantity of particles of the electrode active material reaches 10% and 50%, respectively.

In some implementations, an average thickness h₁ of the conductive material dense region satisfies: D₅₀/2 ≤ h₁ ≤ D₉₀/2, where
D₉₀ represents a particle size corresponding to a case in which the cumulative distribution percentage of the quantity of particles of the electrode active material reaches 90%.

In some implementations, h₁ ranges from 0.2 µm to 2 µm.

In some implementations, a diameter d of the granular conductive agent ranges from 20 nm to 100 nm.

In some implementations, on one side of the foil, a total coverage rate of the plurality of recessed low-binder regions on a surface of the foil ranges from 33% to 70%.

In some implementations, a work function of the conductive coating is between that of the foil and that of the electrode active material.

In some implementations, the granular conductive agent is one or more of carbon black, conductive carbon spheres, and metal carbide particles.

In some implementations, the conductive material further includes a sheet-like conductive agent, at least some recessed low-binder regions include the sheet-like conductive agent, and a thickness of the sheet-like conductive agent is smaller than the diameter of the granular conductive agent.

In some implementations, when the conductive material includes the sheet-like conductive agent, each of the plurality of recessed low-binder regions includes the sheet-like conductive agent.

In some implementations, mass of the sheet-like conductive agent is 0.01 to 0.1 times mass of the granular conductive agent.

In some implementations, the sheet-like conductive agent is one or more of graphene, conductive carbon nitride, MXenes nanosheets, and metal carbide nanosheets.

In some implementations, a mass proportion of the sheet-like conductive agent in the conductive material ranges from 0.1% to 9%, and a mass proportion of the granular conductive agent in the conductive material ranges from 91% to 99.9%.

In some implementations, the binder includes one or more of polyvinylidene fluoride (PVDF), polytetrafluoroethylene (PTFE), polyvinyl alcohol (PVA), styrene-butadiene rubber (SBR), polyacrylonitrile (PAN), polyimide (PI), polyacrylic acid (PAA), polyacrylate, polyolefin (such as polyethylene, polypropylene, polystyrene, or the like), sodium carboxymethyl cellulose (CMC), sodium alginate, and the like.

According to a second aspect, this application provides an electrode plate. The electrode plate has the current collector according to the first aspect of this application, and an electrode active material layer disposed on the current collector. The electrode plate may be a positive electrode plate or a negative electrode plate.

Because the current collector is used, effective contact sites between a particle of an electrode active material in the electrode plate and a conductive material in the current collector are significantly increased, and a quantity of unnecessary interfaces is reduced. This is conducive to further reducing a contact resistance of a battery and reducing an ohmic resistance of the battery, so that low-temperature performance of the battery is significantly improved.

According to a third aspect, this application provides a secondary battery. The secondary battery includes the electrode plate according to the second aspect of this application. Because a positive electrode and/or a negative electrode of the secondary battery use/uses the electrode plate, low-temperature performance of the secondary battery is significantly improved.

According to a fourth aspect, this application provides a power consuming device. The power consuming device includes the secondary battery according to the third aspect of this application.

### BRIEF DESCRIPTION OF DRAWINGS

FIG. 1A is a schematic sectional view of a structure of a current collector according to an embodiment of this application;
FIG. 1B is a top view of a conductive coating in a current collector and a side view of the conductive coating carrying an electrode active material according to an embodiment of this application;
FIG. 2 is an electron microscope photograph for surface scanning of a current collector F1 according to Example 1 of this application, where a scale in FIG. 2 is a particle size D₅₀ of particles of a positive electrode active material;
FIG. 3 is an electron microscope photograph for surface scanning of a current collector DF2 according to Comparative Example 2;
FIG. 4 summarizes direct-current internal resistance analysis results obtained when a battery in Example 1 and batteries in comparative examples were discharged at a constant current of 0.1 C for 30s at 25°C (a) and -10°C (b) separately; and
FIG. 5 is a diagram of a structure of a power consuming device according to an embodiment of this application.

### DESCRIPTION OF EMBODIMENTS

The following describes technical solutions in embodiments of this application in detail with reference to the accompanying drawings.

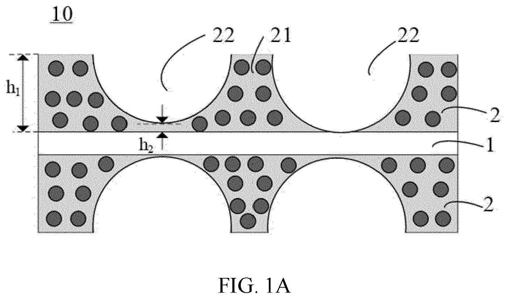

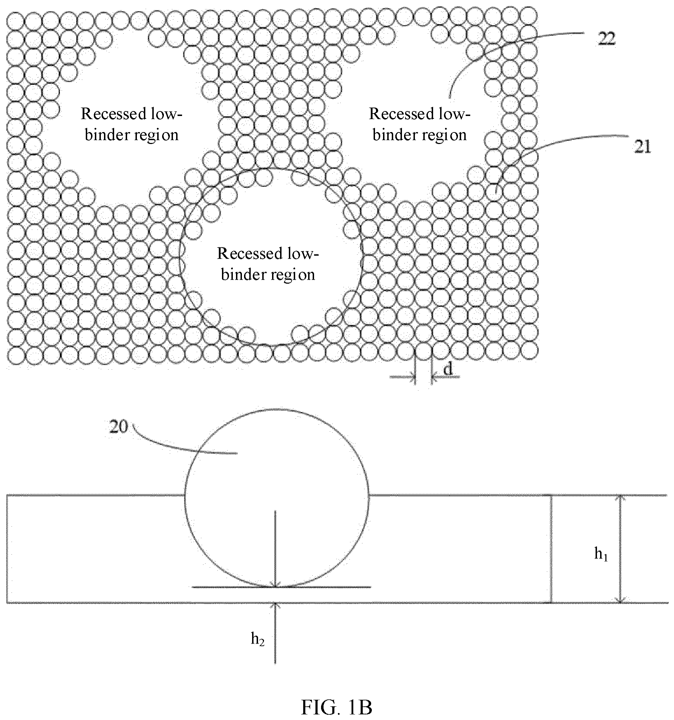

Refer to FIG. 1A and FIG. 1B together. An embodiment of this application provides a current collector. The current collector 10 includes foil 1 and a conductive coating 2 disposed on surfaces of two opposite sides of the foil 1. The conductive coating 2 includes a conductive material dense region 21 and a plurality of recessed low-binder regions 22 spaced apart in the conductive material dense region 21. The conductive material dense region 21 includes a conductive material and a binder. The conductive material includes a granular conductive agent (FIG. 1A and FIG. 1B are examples in which the conductive material is only the granular conductive agent). At least a part of each recessed low-binder region 22 does not include the binder, and at least a part of each recessed low-binder region 22 does not include the granular conductive agent. The conductive material includes the granular conductive agent (FIG. 1A and FIG. 1B are examples in which the conductive material is only the granular conductive agent).

It may be understood that each conductive coating 2 includes the conductive material and the binder, but the conductive material and the binder do not completely cover the foil 1. As a result, the conductive coating 2 is divided into the conductive material dense region 21 and the plurality of spaced recessed low-binder regions 22. Although the conductive material is not evenly distributed on the foil 1, the conductive material may be evenly distributed in the conductive material dense region 21. Contact between the granular conductive agent and the foil 1 is single-point contact, and the granular conductive agent needs to be adhered to the foil 1 with the help of the binder. The at least a part of the recessed low-binder region 22 is controlled not to include the granular conductive agent, so that an amount of binders used can be greatly reduced, or the binder is even not included.

Presence of such a recessed low-binder region 22 in the conductive coating 2 can ensure that when an electrode active material layer is coated on the current collector 10, contact sites between some particles of an electrode active material (refer to a number 20 in FIG. 1B) and the current collector 10 fall into the recessed low-binder region 22. This part of the region includes no or excessively few insulating binders, which allows binder-free conductive path to exist between the foil 1 of the current collector 10 and the electrode active material. This is conducive to reducing an ohmic resistance of a battery, so that a low-temperature internal resistance of the battery is significantly reduced, and an improvement extent of low-temperature performance of the battery is increased. In addition, presence of the conductive material dense region of a specific thickness makes a side surface of the recessed low-binder region 22 a curved structure, which increases a quantity of contact sites between each particle of the electrode active material and the current collector 10 (where the particle of the electrode active material is in single-point contact with the conductive coating in a non-recessed region). This is conducive to further reducing the contact resistance of the battery, so that the low-temperature internal resistance of the battery is significantly reduced, and low-temperature performance is further improved.

Therefore, compared with a conventional current collector whose entire surface is covered with a conductive coating, the current collector provided in this embodiment of this application can achieve effect of reducing the ohmic resistance of the battery and further reducing the contact resistance. Internal resistances of the battery usually include polarization internal resistances generated by an ohmic resistance R_{Ω}, a contact resistance R_{c}, an electrochemical reaction resistance (a SEI mode resistance R_{SEI} and a charge transfer resistance R_{ct}), and a diffusion resistance R_{d}. In this application, the ohmic resistance and the contact resistance are reduced at the same time, to reduce the electrochemical reaction resistance. This indirectly promotes increase of an electric field gradient force of solid-phase diffusion of active ions, reduces the diffusion resistance, and increases a solid-phase diffusion rate of the active ions, especially significantly improving a diffusion rate at a low temperature. This is conducive to reducing the low-temperature internal resistance of the battery, improving cycle performance, power performance, and the like at a low temperature, and reducing a charging voltage platform and increasing a discharge voltage platform at a low temperature, to improve a specific discharge capacity and energy density of the battery. Furthermore, use of the current collector does not reduce room-temperature performance, high-temperature performance, and the like of the battery.

In this application, the recessed low-binder region 22 may not include any binder, or a part of the region includes the binder. If a part of the region includes the binder, mass proportion of the binder in the recessed low-binder region 22 is much lower than mass proportion of the binder in the conductive material dense region 21. In some implementations, the recessed low-binder region 22 does not include the binder. This is more conducive to reducing the ohmic resistance of the battery using the current collector 10. Each recessed low-binder region 22 may not include any granular conductive agent, or a part of the region may not include the granular conductive agent. Certainly, the recessed low-binder region 22 may include a conductive material in another shape (such as a sheet-like conductive agent). It may be understood that a thickness h₂ of the recessed low-binder region 22 may be greater than or equal to 0 and less than a thickness of the conductive material dense region 21. When the thickness of the recessed low-binder region 22 is 0, it represents that the recessed low-binder region is a blank region without any material, that is, does not include the binder and the conductive material.

In an implementation of this application, the current collector 10 may satisfy one or more of the following conditions:
(a) Refer to FIG. 1B. An average area S of the plurality of recessed low-binder regions 22 is smaller than a projected area S_{projection} corresponding to a particle size D₅₀ of the electrode active material.
(b) An average particle size d of the granular conductive agent is less than 1/2 of a particle size D₁₀ of the electrode active material.

D₁₀ and D₅₀ represent particle sizes corresponding to cases in which a cumulative distribution percentage of a quantity of particles of the electrode active material reaches 10% and 50%, respectively.

The condition (a) can ensure that when the electrode active material layer is coated on the current collector 10, the particle of the electrode active material may be sunken on the recessed low-binder region 22, so that a direct contact site between the particle of the electrode active material and the foil 1 is located in the region with excessively few binders, and a transmission resistance of electrons between the foil and the electrode active material is reduced, to achieve effect of reducing the ohmic resistance of the battery. At the same time, the condition (a) may also ensure that the conductive material in the conductive coating 2 is mainly filled in a gap between the particles of the electrode active material, and ensure that a conductive network structure between the particles of the electrode active material is complete, to achieve effect of reducing the contact resistance of the battery. S_{projection}=π×(0.5D₅₀)².

The condition (b) can ensure that a particle size of the granular conductive agent is small, so that a quantity of conductive materials that may be in contact with the particle of the electrode active material and that are adjacent to an inner wall of the recessed low-binder region 22 is effectively increased, an electron transmission path between the particle of the electrode active material and the current collector 10 is multiplied, and the contact resistance is significantly reduced. When d and D₁₀ are compared in the condition (b), both d and D₁₀ need to be converted into a same unit. Similarly, S and S_{projection} also need to be converted into a same unit for comparison.

An area of each recessed low-binder region 22 may be obtained based on an electron microscope photograph of the conductive coating 2, and the average area S of the plurality of recessed low-binder regions 22 is calculated. The area of each recessed low-binder region 22 is a maximum projected area of the recessed low-binder region 22 on the foil 1, that is, a recess opening area of the recessed low-binder region. S may be greater than 0 and less than S_{projection}.

In this application, on one side of the foil 1, a total coverage rate of the plurality of recessed low-binder regions 22 on a surface of the foil 1 ranges from 33% to 70%. In other words, a sum of areas of the plurality of recessed low-binder regions 22 is 33% to 70% of an area of the surface of the side that is of the foil 1 and in which the recessed low-binder regions 22 are located. In this way, a coverage degree of the recessed low-binder regions on the foil 1 is appropriate, which facilitates reduction of the ohmic resistance and the contact resistance of the battery using the current collector 10 at the same time to a large extent. In addition, it can be learned from the coverage rate that a sum of distribution areas of the conductive material dense region 21 on the foil 1 accounts for 30% to 67% of a surface area of the foil 1.

In some implementations of this application, an average thickness h₁ of the conductive material dense region 21 satisfies the following condition (c):
(c) D₅₀/2 ≤ h₁ ≤ D₉₀/2, where D₉₀ represents a particle size corresponding to a case in which the cumulative distribution percentage of the quantity of particles of the electrode active material reaches 90%.

The condition (c) can ensure that a surface that is of the conductive material dense region 21 and that is away from the foil 1 is basically flush with a half-height of the particle of the electrode active material, and nearly half of a size of a single particle of the electrode active material can be filled in the recessed low-binder region 22, to significantly increase a contact area between the particle of the electrode active material and the conductive material adjacent to the inner wall of the recessed low-binder region 22, significantly reduce the contact resistance of the battery, then significantly reduce the low-temperature internal resistance of the battery, and even improve a room-temperature internal resistance of the battery, so that room-temperature performance of the battery is not reduced and is even improved to a specific extent when low-temperature performance of the battery is significantly improved. When it is determined whether the condition (c) is met, D₅₀, D₉₀, and h₁ need to be compared in a same unit.

In some implementations of this application, the current collector 10 satisfies one or more of the above conditions (a), (b), and (c). In addition, when the current collector 10 satisfies (a), (b) and (c) at the same time, the low-temperature internal resistance of the battery prepared by using the current collector 10 is lower and the low-temperature performance is more significantly improved.

The above parameters D₁₀, D₅₀, and D₉₀ may be obtained from a particle size distribution diagram that is of the electrode active material and that is obtained based on a laser diffraction method, or may be obtained through statistical analysis that is of particle sizes of several particles of the electrode active material and that is performed based on an electron microscope photograph of the electrode active material. However, it should be noted that D₁₀, D₅₀, and D₉₀ need to be obtained in a same method. Similarly, the average particle size d of the granular conductive agent may be obtained from an electron microscope photograph of the granular conductive agent, or from a particle size distribution diagram that is of the granular conductive agent and that is obtained based on the laser diffraction method (in the latter method, d is a median particle size). The parameter h₁ may be an average value that is of thicknesses of different regions of the conductive material dense region 21 and that is obtained by directly or indirectly measuring the thicknesses of the different regions of the conductive material dense region 21.

Optionally, h₁ ranges from 0.2 µm to 2 µm. This ensures that there is a specific thickness difference between the conductive material dense region 21 and the recessed low-binder region 22, and ensures that an area of a side surface of the recessed low-binder region 22 is large to increase the contact sites between the particle of the electrode active material and the current collector 10, so that the contact resistance of the battery is reduced, and low-temperature performance is significantly improved. Optionally, a diameter d of the granular conductive agent ranges from 20 nm to 100 nm. Optionally, D₅₀ of the electrode active material ranges from 0.1 µm to 1 µm.

In this application, a work function of the conductive material in the conductive coating 2 is between that of the foil 1 and that of the electrode active material. The term "work function" represents minimum energy required for an electron with a starting energy equal to a Fermi level to escape from the inside of a metal/semiconductor into a vacuum. A magnitude of a value of the work function indicates how strongly the electron is bound in the metal/semiconductor. Because a movement direction of the electron from the foil of the current collector, through the conductive coating, to the electrode active material is opposite during charging and discharging processes, and a contact potential difference of substances with similar work functions is small, controlling the work function of the conductive material to be between the that of the foil 1 and that of the electrode active material can ensure a small interface contact potential difference during both forward and reverse electron movements, so that an interface contact resistance is reduced.

A material of the conductive material may include but is not limited to carbon materials (such as carbon black, graphene, conductive carbon spheres) and the like. A shape of the conductive material may include but is not limited to a granular shape, and may also be one or more of a sheet-like shape, a tubular shape, and the like. In an implementation of this application, the granular conductive agent is one or more of carbon black, conductive carbon spheres, and metal carbide particles.

In some implementations of this application, the conductive material further includes the sheet-like conductive agent, at least some recessed low-binder regions 22 include the sheet-like conductive agent, and a thickness of the sheet-like conductive agent is smaller than the diameter of the granular conductive agent.

"The at least some recessed low-binder regions 22 include the sheet-like conductive agent" can ensure that there is a conductive path of a two-dimensional conductive agent between the electrode active materials falling in some recessed low-binder regions 22 and the foil 1, so that the ohmic resistance of the battery can be further reduced, and the low-temperature internal resistance of the battery is further reduced, to further increase the improvement extent of low-temperature performance of the battery. In some implementations, when the conductive material includes the sheet-like conductive agent, each recessed low-binder region 22 includes the sheet-like conductive agent. In this way, effect of improving low-temperature performance of the battery is clearer. That "the thickness of the sheet-like conductive agent is smaller than the diameter of the granular conductive agent" can ensure that the thickness of the recessed low-binder region 22 is not higher than that of the conductive material dense region 21.

In an implementation of this application, the sheet-like conductive agent is one or more of graphene, conductive carbon nitride, MXenes nanosheets, and metal carbide nanosheets. Furthermore, mass of the sheet-like conductive agent is 0.01 to 0.1 times mass of the granular conductive agent. This is more conducive to better keeping a balance between the ohmic resistance and the contact resistance of the battery using the current collector 10. Optionally, a mass proportion of the sheet-like conductive agent in the conductive material ranges from 0.1% to 9%, and a mass proportion of the granular conductive agent in the conductive material ranges from 91% to 99.9%. In some embodiments, the conductive material may be carbon black and graphene.

In this application, the binder may independently be one or more of polyvinylidene fluoride (PVDF), polytetrafluoroethylene (PTFE), polyvinyl alcohol (PVA), styrene-butadiene rubber (SBR), polyacrylonitrile (PAN), polyimide (PI), polyacrylic acid (PAA), polyacrylate, polyolefin (such as polyethylene, polypropylene, polystyrene, or the like), sodium carboxymethyl cellulose (CMC), sodium alginate, and the like, but is not limited thereto. A type of the binder may be selected according to whether the current collector 10 is specifically used as a current collector of a positive electrode plate or a current collector of a negative electrode plate. For example, when the current collector 10 is specifically used as the current collector of the positive electrode plate, the binder may usually be PVDF, PTFE, or the like. When the current collector 10 is specifically used as the current collector of the negative electrode plate, the binder may be SBR, CMC, PAA, sodium alginate, or the like. In an implementation of this application, in the conductive coating 2, mass of the binder may account for 37% to 67% of a sum of mass of the binder and the conductive material.

In this application, when the current collector 10 is specifically used to prepare the positive electrode plate, the foil 1 may be aluminum foil, aluminum alloy foil, or the like; or when the current collector 10 is used to prepare the negative electrode plate, the foil 1 may be copper foil, copper alloy foil, nickel foil, nickel alloy foil, or the like.

An embodiment of this application further provides an electrode plate. The electrode plate includes the foregoing current collector 10 in embodiments of this application. The electrode plate using the current collector 10 may be a positive electrode plate or a negative electrode plate. In other words, the current collector may be specifically used as a positive electrode current collector or a negative electrode current collector.

Usually, the electrode plate includes the current collector 10 and an electrode active material layer disposed on the current collector 10. The electrode active material layer may be disposed on a surface of one side of the current collector 10, or the electrode active material layer may be disposed on surfaces of two opposite sides of the current collector 10. It may be understood that if the electrode plate is a positive electrode plate, the electrode active material layer is specifically a positive electrode active material layer, and if the electrode plate is a negative electrode plate, the electrode active material layer is specifically a negative electrode active material layer.

In some implementations of this application, the electrode plate is a positive electrode plate, including the current collector 10 and the positive electrode active material layer disposed on the current collector 10. Conductivity of a positive electrode active material is usually worse than that of a negative electrode active material, and an active ion diffusion coefficient of the positive electrode active material has a significant downward trend with decreasing temperatures. This has significant impact on low-temperature performance of a battery. Therefore, when the positive electrode plate uses the current collector 10, low-temperature performance of the battery is improved more significantly. A particle size of the positive electrode active material is larger than that of the foregoing conductive material, and has a higher degree of compatibility with the foregoing recessed low-binder region 22, which makes it easier to meet the foregoing conditions (a), (b), and (c).

For a lithium battery, the positive electrode active material may include but is not limited to one or more of the following: lithium-including phosphate (such as lithium iron phosphate (LFP) and lithium iron manganese phosphate (LMFP)), single oxides of lithium (such as lithium cobalt oxide, lithium nickel oxide, and lithium manganese oxide), binary oxides of lithium (such as lithium nickel manganese oxide, lithium nickel cobalt oxide, and lithium cobalt manganese oxide), ternary oxides of lithium (such as lithium nickel cobalt manganese oxide ternary materials and lithium nickel cobalt aluminum oxide ternary materials), multi-element oxides of lithium, or the like.

An embodiment of this application further provides a secondary battery. The secondary battery includes the foregoing electrode plate in embodiments of this application. A positive electrode and/or a negative electrode of the secondary battery may be the electrode plate.

The secondary battery may be a liquid battery, a solid-state battery, or a half-solid state battery. For the liquid battery in which an electrolyte is liquid, the secondary battery usually includes a positive electrode, a negative electrode, and a separator and an electrolyte provided between the positive electrode and the negative electrode. The separator is used to separate the positive electrode from the negative electrode to maintain insulation between the positive electrode and the negative electrode. The separator, a positive electrode plate, and a negative electrode plate jointly form a battery cell of the secondary battery, and the battery cell is accommodated in a battery housing.

In this embodiment of this application, the secondary battery is a lithium secondary battery, a sodium secondary battery, a potassium secondary battery, a zinc secondary battery, or the like. In some implementations, the secondary battery is a lithium secondary battery. Furthermore, a positive electrode of the lithium secondary battery is a positive electrode plate prepared by using the foregoing current collector 10 in embodiments of this application. In this way, low-temperature performance of the battery is improved more significantly.

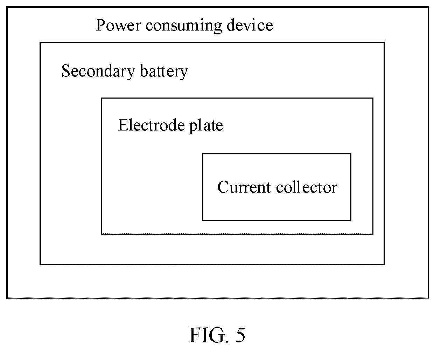

As shown in FIG. 5, an embodiment of this application further provides a power consuming device, and the power consuming device is provided with the secondary battery in embodiments of this application. The power consuming device may be a transportation means, such as a vehicle, a ship, or the like, or may be a 3C product or the like.

The technical solutions of this application are further described below in conjunction with a plurality of specific embodiments.

### Example 1

A preparation method for a current collector used for a positive electrode plate includes the following steps:
A conductive material (which was specifically nano-conductive carbon black, with an average particle size d of 35 nm) and a binder (which was specifically a polyacrylic acid aqueous binder) were dispersed in deionized water at a mass ratio of 1:1.5 to obtain a conductive slurry. The conductive slurry was coated on regions on two opposite sides of aluminum foil, and was baked to form a conductive coating and obtain the current collector, denoted as F1. A slurry coating region, a coating rate, a slurry formula, and the like were controlled, to regulate a distribution position and an area of each recessed low-binder region and a thickness of a conductive material dense region.

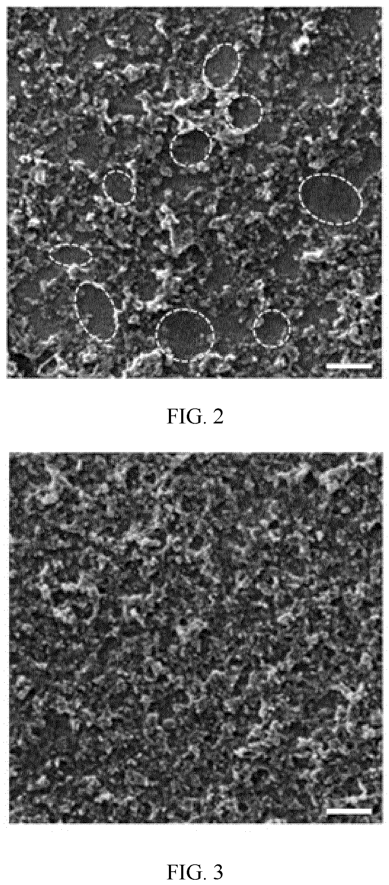

In the current collector F1 prepared in Example 1, the conductive coating includes the conductive material dense region and a plurality of recessed low-binder regions (refer to circular dotted frames in FIG. 2 ) that are spaced apart in the conductive material dense region, and each recessed low-binder region does not include conductive carbon black and the binder. An average area S of the plurality of recessed low-binder regions is smaller than a projected area corresponding to a particle size D₅₀ of the following positive electrode active material, and a total coverage rate of the plurality of recessed low-binder regions on an aluminum foil surface is 58%. In addition, a thickness distribution range of the conductive material dense region is 1 µm to 2 µm, and an average thickness h₁ of the conductive material dense region is 1.5 µm.

A preparation method for a lithium-ion battery includes:
(1) Preparing the positive electrode plate: The positive electrode active material (which was specifically lithium iron phosphate coated with a carbon material on a surface, with a particle size D₁₀ of 0.1 µm, a particle size D₅₀ of 0.5 µm, and a particle size D₉₀ of 4 µm), a conductive agent (which was specifically conductive carbon black, with an average particle size d of 40 nm), and a binder (which was specifically PVDF) were mixed in a solvent NMP at a mass ratio of 100:2:3, and stirred evenly to obtain a positive electrode slurry. Then, the positive electrode slurry was coated on the foregoing current collector F1, to obtain the positive electrode plate through baking and rolling. Positive electrode active material layers were formed on surfaces of two opposite sides of the current collector F1, and relevant particle size parameters of the positive electrode active material matched those of the conductive coating of the current collector F1.
(2) Preparing a negative electrode plate: A negative electrode active material (which was specifically graphite), the conductive agent (which was specifically conductive carbon black), and a binder (which was specifically SBR) were dispersed in deionized water at a mass ratio of 100:2:3, and were stirred evenly to obtain a negative electrode slurry. The negative electrode slurry was coated to surfaces of two opposite sides of copper foil, to obtain the negative electrode plate through baking and rolling.
(3) Assembling the battery: In a glove box filled with argon, the positive electrode plate, a separator, and the negative electrode plate were stacked to obtain a battery cell. The stacked battery cell was then wound and placed in an aluminum-plastic film, and an electrolyte was injected. After formation and degassing, the battery cell underwent secondary packaging and capacity grading, to obtain a soft-pack lithium battery with a designed capacity of 1600 mAh, denoted as C1.

### Example 2

A main difference between Example 2 and Example 1 lies in that when a current collector used for a positive electrode plate was prepared, a conductive material used was specifically nano-conductive carbon black (whose average particle size was the same as that in Example 1) and few-layer graphene (with a length of about 1 µm and a thickness less than 10 nm). A mass ratio of graphene to carbon black was 1:40, which was equal to a ratio of a particle size D₉₀ to a particle size D₁₀ of a particle of a positive electrode active material. When a conductive coating with a recessed low-binder region was formed, a first slurry including the few-layer graphene and a binder was first coated on aluminum foil, and then a second slurry including highly-conductive carbon black and the binder was coated on regions. A coating material of the recessed region was the few-layer graphene.

The current collector prepared in Example 2 was denoted as F2. According to the method described in Example 1, the current collector F2 in Example 2 was used to prepare a positive electrode plate, and a soft-pack battery C2 was obtained through assembly.

On the conductive coating of the current collector F2, each recessed low-binder region does not include conductive carbon black, at least a part of each recessed low-binder region does not include the binder, and at least some recessed low-binder regions include the few-layer graphene. A two-dimensional planar structure, of graphene, with ultra-highly conductivity enables interface-free transmission of electrons at a micron level, so that a minimum thickness of the recessed low-binder region and a quantity of unnecessary interfaces between aluminum foils are significantly reduced. In addition, on a conductive coating of a single surface, a total coverage rate of a plurality of recessed low-binder regions on a surface of the aluminum foil ranges from 33% to 70%. A thickness distribution range of a conductive material dense region ranges from 0.2 µm to 1.8 µm, and an average thickness h₁ of the conductive material dense region is 1 µm.

To highlight beneficial effect of this application, this application further sets the following Comparative Example 1 and Comparative Example 2.

### Comparative Example 1

Pure aluminum foil was directly used as a current collector DF1 used for a positive electrode plate. The positive electrode plate was prepared according to the method described in Example 1, and a soft-pack battery D1 was obtained through assembly.

### Comparative Example 2

A main difference between Comparative Example 2 and Example 1 lies in that when a current collector used for a positive electrode plate was prepared, a conductive slurry including conductive carbon black and a binder was coated on an entire surface of aluminum foil, and an obtained conductive coating had no recessed low-binder region (as shown in FIG. 3 ).

Aluminum foil, with the conductive coating, prepared in Comparative Example 2 was denoted as DF2, where a thickness of a conductive coating of a single surface was controlled at 1.5±0.5 µm. According to the method described in Example 1, the current collector DF2 in Comparative Example 2 was used to prepare the positive electrode plate, and a soft-pack battery D2 was obtained through assembly.

To strongly support the beneficial effect brought by the technical solution in embodiments of this application, the foregoing soft-pack batteries were subjected to the following performance tests:

### (1) Test of direct current internal resistances (DCIRs) of batteries at different temperatures

At a room temperature (25°C), the foregoing soft-pack batteries were discharged at a constant current of 1/3C to 2.0 V, and then charged at a constant current of 1/3 C to 50% SOC. The soft-pack batteries were discharged at a constant current of 1.5 C for 30s at 25°C and -10°C separately, to record voltages before and after discharge, and calculate the discharge DCIR, where the discharge DCIR (mΩ)=(voltage before discharge-voltage after discharge)/discharge current*1000. Results are shown in Table 1 below.

### (2) Test of a discharge capability of the batteries at a low temperature

An initial discharge capacity after formation for each soft-pack battery was denoted as C₀. The soft-pack battery was fully charged at 25°C with constant-current constant-voltage at 1/3 C₀, where a constant-voltage cut-off current was 0.05 C₀. Then, the soft-pack battery was discharged to 2.0V at a constant current of 1/3 C at -10°C, with a discharge capacity denoted as C₁. A discharge capacity retention rate at -10°C @ 1/3 C was calculated as C₁/C₀*100%. Results are shown in Table 2.

### (3) Test of direct current internal resistance analysis of the batteries

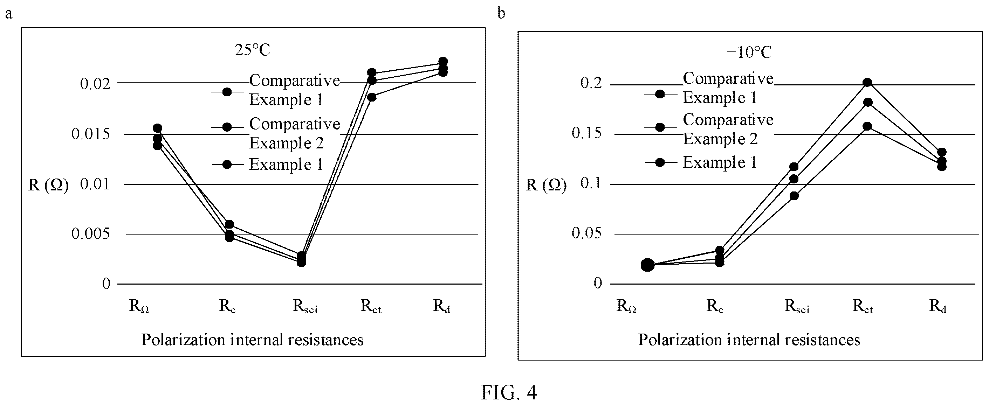

The foregoing soft-pack batteries were maintained at 50% SOC, to perform an electrochemical resistance spectroscopy test and a discharge DCIR test with discharge at a constant current of 0.1 C for 30s. Test temperatures were 25°C and -10°C. Time constants of polarization responses of R_{Ω}, R_{c}, Rₛₑᵢ, R_{ct}, and R_{d} were obtained through resistance spectroscopy decomposition, to obtain corresponding values between time and DCIR obtained during discharge at the constant current of 0.1 C for 30s. Finally, polarization internal resistances were separated based on the time constants, to obtain direct current internal resistance analysis results for the batteries. FIG. 4 summarizes direct-current internal resistance analysis results obtained when the battery in Example 1 and the batteries in Comparative Example 1 and Comparative Example 2 were discharged at the constant current of 0.1 C for 30s at 25°C (a) and -10°C (b) separately. Table 3 below lists resistance values of the batteries at 25°C and -10°C.

**Table 1**

| Battery number | 50% SOC @ 1.5 C discharge DCIR (mΩ) | |
|---|---|---|
| | 25°C | -10°C |
| C1 | 41.4 | 150.1 |
| C2 | 36.6 | 136.2 |
| D1 | 71.5 | 248.1 |
| D2 | 59.4 | 180.4 |

**Table 2**

| Battery number | -10°C @ 1/3 C capacity retention rate (%) |
|---|---|
| C1 | 71.3 |
| C2 | 73.2 |
| D1 | 65.7 |
| D2 | 69.1 |

**Table 3**

| | 25°C | | | -10°C | | |
|---|---|---|---|---|---|---|
| | R_{Ω} (Ω) | R_{c} (Ω) | R_{SEI}+R_{ct} (Ω) | R_{Ω} (Ω) | R_{c} (Ω) | R_{SEI}+R_{ct} (Ω) |
| Example 1 | 0.014 | 0.004 | 0.021 | 0.016 | 0.020 | 0.243 |
| Comparative Example 1 | 0.015 | 0.006 | 0.024 | 0.017 | 0.032 | 0.316 |
| Comparative Example 2 | 0.016 | 0.005 | 0.023 | 0.018 | 0.023 | 0.284 |

A positive electrode current collector in Comparative Example 1 is aluminum foil without a conductive coating on a surface, and a surface of a positive electrode current collector in Comparative Example 2 is evenly and completely covered with a conductive coating including highly-conductive nano-carbon black. It can be seen from FIG. 4 and Table 3 that, the battery in Comparative Example 2 is different from the battery D1 in Comparative Example 1 in that the ohmic resistance R_{Ω} is not reduced, and only the contact resistance R_{c} is reduced. In Example 1 in which a conductive coating of a positive electrode current collector has the recessed low-binder region, the ohmic resistance R_{Ω} of the battery is reduced compared with that in Comparative Example 2, and the contact resistance R_{c} is further reduced compared with that in Comparative Example 2, so that R_{SEI}+R_{ct} is significantly reduced, especially R_{SEI}+R_{ct} at -10°C. This shows that using the positive electrode current collector in embodiments of this application is conducive to reducing the ohmic resistance and the contact resistance of the battery at the same time, so that sums of polarization internal resistances of the battery at both a room temperature and a low temperature are excessively small. Especially, the low-temperature internal resistance becomes smaller (refer to Table 1 and Table 3), which is conducive to improving the discharge capability of the battery at a low temperature (refer to Table 2).

The foregoing embodiments are merely several implementations of this application, and descriptions thereof are specific and detailed, but cannot be understood as a limitation on the scope of the patent in this application. It should be noted that a person of ordinary skill in the art may make some variants and improvements without departing from the concept of this application and the variants and improvements shall fall within the protection scope of this application.

## Claims

1. A current collector (10) for carrying an electrode active material, comprising:
foil (1); and
a conductive coating (2), wherein the conductive coating (2) is disposed on surfaces of two opposite sides of the foil (1), and the conductive coating (2) comprises:
a conductive material dense region (21), wherein the conductive material dense region (21) comprises a conductive material and a binder, and the conductive material comprises a granular conductive agent; and
a plurality of recessed low-binder regions (22), wherein the plurality of recessed low-binder regions (22) are spaced apart in the conductive material dense region (21), at least a part of each of the plurality of recessed low-binder regions (22) does not comprise the binder, and at least a part of each of the plurality of recessed low-binder regions (22) does not comprise the granular conductive agent.

2. The current collector (10) according to claim 1, wherein the current collector (10) satisfies one or more of the following conditions:
(a) an average area S of the plurality of recessed low-binder regions (22) is smaller than a projected area corresponding to a particle size D₅₀ of the electrode active material; and
(b) an average particle size d of the granular conductive agent is less than 1/2 of a particle size D₁₀ of the electrode active material, wherein
D₁₀ and D₅₀ represent particle sizes corresponding to cases in which a cumulative distribution percentage of a quantity of particles of the electrode active material reaches 10% and 50%, respectively.

3. The current collector (10) according to claim 1 or 2, wherein an average thickness h₁ of the conductive material dense region satisfies: D₅₀/2 ≤ h₁ ≤ D₉₀/2, wherein
D₉₀ represents a particle size corresponding to a case in which the cumulative distribution percentage of the quantity of particles of the electrode active material reaches 90%.

4. The current collector (10) according to claim 3, wherein h₁ ranges from 0.2 µm to 2 µm.

5. The current collector (10) according to any one of claims 1 to 4, wherein a diameter d of the granular conductive agent ranges from 20 nm to 100 nm.

6. The current collector (10) according to any one of claims 1 to 5, wherein on one side of the foil (1), a total coverage rate of the plurality of recessed low-binder regions (22) on a surface of the foil (1) ranges from 33% to 70%.

7. The current collector (10) according to any one of claims 1 to 6, wherein a work function of the conductive coating (2) is between that of the foil (1) and that of the electrode active material.

8. The current collector (10) according to any one of claims 1 to 7, wherein the granular conductive agent is one or more of carbon black, conductive carbon spheres, and metal carbide particles.

9. The current collector (10) according to any one of claims 1 to 8, wherein the conductive material further comprises a sheet-like conductive agent, at least some recessed low-binder regions (22) comprise the sheet-like conductive agent, and a thickness of the sheet-like conductive agent is smaller than the diameter of the granular conductive agent.

10. The current collector (10) according to claim 9, wherein when the conductive material comprises the sheet-like conductive agent, each of the plurality of recessed low-binder regions (22) comprises the sheet-like conductive agent.

11. The current collector (10) according to claim 9 or 10, wherein mass of the sheet-like conductive agent is 0.01 to 0.1 times mass of the granular conductive agent.

12. The current collector (10) according to any one of claims 9 to 11, wherein the sheet-like conductive agent is one or more of graphene, conductive carbon nitride, MXenes nanosheets, and metal carbide nanosheets.

13. The current collector (10) according to any one of claims 9 to 12, wherein a mass proportion of the sheet-like conductive agent in the conductive material ranges from 0.1% to 9%, and a mass proportion of the granular conductive agent in the conductive material ranges from 91% to 99.9%.

14. The current collector (10) according to any one of claims 1 to 13, wherein the binder comprises one or more of polyvinylidene fluoride (PVDF), polytetrafluoroethylene (PTFE), polyvinyl alcohol (PVA), styrene-butadiene rubber (SBR), polyacrylonitrile (PAN), polyimide (PI), polyacrylic acid (PAA), polyacrylate, polyolefin (such as polyethylene, polypropylene, polystyrene, or the like), sodium carboxymethyl cellulose (CMC), sodium alginate, and the like.

15. An electrode plate, wherein the electrode plate comprises the current collector (10) according to any one of claims 1 to 14, and an electrode active material layer disposed on the current collector (10).

16. A secondary battery, wherein the secondary battery comprises the electrode plate according to claim 15.

17. A power consuming device, wherein the power consuming device comprises the secondary battery according to claim 16.
